# EUROPEAN PATENT SPECIFICATION

(11) **EP 2 872 568 B1**
(45) Date of publication and mention of the grant of the patent: **19.06.2019**
(21) Application number: 13813174.3
(22) Date of filing: 03.07.2013
(51) Int. Cl.: C09B 67/00

(54) **OLEFIN-MALEIC ANHYDRIDE COPOLYMER COMPOSITIONS AND USES THEREOF**
OLEFIN-MALEINANHYDRID-COPOLYMER-ZUSAMMENSETZUNGEN UND VERWENDUNGEN DAVON
COMPOSITIONS DE COPOLYMÈRES D'OLÉFINE-ANHYDRIDE MALÉIQUE ET LEURS UTILISATIONS

(30) Priority: 06.07.2012 US 201261668687 P; 15.03.2013 US 201361788941 P
(43) Date of publication of application: 20.05.2015
(73) Proprietor: Vertellus Holdings LLC, Indianapolis IN 46204 (US)
(72) Inventor: ADUR, Ashok M., Westlake, Ohio 44145 (US); TARANEKAR, Prasad, Hopatcong, New Jersey 07843 (US)
(74) Representative: HGF Limited
(86) International application number: PCT/US2013/049201
(87) International publication number: WO 2014/008330

(56) References cited:
- EP-A1- 2 970 664
- WO-A1-2012/024268
- US-A- 3 516 961
- US-A- 5 244 971
- US-A1- 2001 049 424
- US-A1- 2009 227 739

## Description

### CROSS-REFERENCE TO RELATED APPLICATIONS

This application claims priority under 35 U.S.C. § 119(e) to U.S. Provisional Application Serial No. 61/668,687, entitled "Olefin-Maleic Anhydride Copolymer Compositions And Uses Thereof' filed July 6, 2012; and U.S. Provisional Application Serial No. 61/788,941, entitled "Olefin-Maleic Anhydride Copolymer Compositions And Uses Thereof' filed March 15, 2013.

Polymer resins are often used in blends and composites which comprise the polymer resin, other polymers, one or more additives, fillers and reinforcements that improve one or more of the properties of the polymer formulation compared to using the polymer resin by itself prior to converting it into the final part or article that is extruded or molded. When the additive is used at low loading levels, the additive is often added in two steps to ensure the uniformity of the additive distribution in the polymer resin. This two step addition process allows elimination or minimization of direct handling of the additive in the final compounding step. The two steps typically are: (1) incorporation of the additive into a carrier resin to give an intermediate plastic composition at a higher concentration than the target concentration for the additive in the final compound polymer resin, i.e. formation of a "concentrate" or "master batch"; and (2) combination of the master batch with the polymer resin and other components to yield the final polymer formulation. Typically, the carrier resin component of the master batch is the same polymer or plastic material into which it is let down in the second step. This method of preparing a master batch is well known to one skilled in the art of polymer or plastics compounding.

When the additive to be used is highly reactive, e. g. use of olefin-maleic anhydride copolymers to form polymer formulations with polyamides (described in WO 2012/024268 A1), preparing a master batch takes on several challenges. One challenge arises in the preparation of a master batch is selection of chemically compatible components (i.e. the components in the master batch do not react with each other) for use in the master batch. Another challenge is to ensure that the olefin-maleic anhydride copolymer containing master batch does not phase-separate. Phase separation can occur when the olefin-maleic anhydride copolymer is chemically incompatible with the carrier resin. If phase separation occurs in a master batch there is a risk that the incorporation of the additive will not be uniform in the polymer formulation. A third challenge is to avoid very high viscosity and consequently very high torque during compounding with polyamides which can result from the rapid reactivity of the olefin-maleic anhydride copolymers with the polyamide. This viscosity increase does not occur during most of the conventional polymer or plastics compounding described in the first paragraph. Most of the typical carrier resins used for preparing master batches suffer from one or more problems and are not suitable for producing a master batch of an olefin-maleic anhydride copolymer.

Described herein is a master batch composition comprising an olefin-maleic anhydride copolymer and one or more additional additives in a matrix of a carrier resin as defined in claim 1. Also described herein are uses of the master batches to enhance the processing and properties of polymer formulations comprising polyamides or Polyamides compounded with the master batch. Some desired characteristics of a master batch include: the master batch improves the uniformity of the incorporation of the additives in the final composition, the master batch reduces the torque of the final polymer composition during processing, the carrier resin used to form the master batch does not react with the additives, the additives do not phase separate from the carrier resin, the carrier resin does not phase separate with the polymer being formulated, the carrier resin remains thermally stable at the processing temperatures and under the processing conditions typically used for processing Polyamides and polyamides, and the presence of the carrier resin in the polymer formulation should not adversely affect the performance of the formulated polymer.

The olefin-maleic anhydride copolymer used in forming the master batch compositions described herein is not a grafted copolymer with one or two maleic anhydride groups per molecular chain, but a true copolymer with multiple maleic anhydride groups on the main chain of the polymer. In one embodiment, the olefin-maleic anhydride copolymer is an alternating copolymer of the olefin and maleic anhydride. In another embodiment, the molar ratio of the olefin and maleic anhydride monomers is 1:1. In one illustrative example, the ethylene-maleic anhydride copolymer is one of the 1:1 alternating copolymers sold under the ZeMac® trademark.

Olefin-maleic anhydride copolymers are typically powders with varying molecular weight and can react with polyamide during the extrusion process acting as chain-extender. In one embodiment, the master batch comprises one or more additives, a thermally stable high melt flow polymer and a compatible carrier resin. Illustrative additives include, but are not limited to, anti-oxidants, nucleating agents, colorants, plasticizers, lubricants, rheology modifiers, friction modifiers, other processing aids, and heat stabilizers for polyamides. As shown in the illustrative examples described herein, an unexpected synergistic effect on the mechanical property enhancement in polyamides formulations formed by compounding a polyamide with the olefin-maleic anhydride copolymer master batch is seen.

It is believed that the master batch composition enhances the mechanical properties of the polyamide by chain extension of the polyamide. One useful application of this is to upgrade recycled Polyamide or polyamide. In this context the term "recycled" can include reprocessed, regrind, and reclaimed polyamide. However, it is also believed that if the chain extender, i.e. olefin-maleic anhydride copolymer, reacts too quickly or randomly then compounding the polyamide with it can adversely affect the polyamide properties. It is believed that the use of a master batch including the olefin-maleic anhydride copolymer prevents the premature reaction of the olefin-maleic anhydride copolymer with reactive moieties present on the polyamide polymer during the compounding stage, increasing the dispersion of the olefin-maleic anhydride copolymer throughout the polymer, and minimizing the potential for localized high concentrations of the olefin-maleic anhydride copolymer thereby preventing gelation. In another embodiment, use of the master batches describe herein increases the time required for melting the added olefin-maleic anhydride copolymer reducing or eliminating the occurrence of localized (spot) reactions. It is believed that the delayed reaction time permits the chain extender to be fully dispersed throughout the polyamide polymer, promoting homogeneous chain extension.

The master batches described herein may be produced in pellet, flake, spheres, prills or other forms.

While injection molding is used as one of the commonly applied processes for the final conversion of the master batches described herein, it is to be noted that the master batches described herein are useful in other processes such as blow molding, roto-forming, fiber forming, film and sheet extrusion and thermoforming.

The examples described herein show that use of the master batch also eliminates or reduces the severity of many of the processing problems resulting from non-uniform feeding of olefin-maleic anhydride copolymers that are not in the form of a master batch yielding smoother processing and more uniform torque values during the reactive extrusion with polyamides (i.e. reactive compounding). Non-uniform feeding of the olefin-maleic anhydride copolymer during compounding with the polyamide leads to surging, non-uniform strand diameter, bubbling, frequent strand breakage, and an unstable process.

Described herein are master batches compositions comprising an olefin maleic anhydride copolymer and an optional stabilizer additive package in a carrier resin as defined in claim 1. The stabilizer package includes additives used individually or in combination. Illustrative additives in the stabilizer package include, but are not limited to, one or more phenolic antioxidants such as N, N'-hexane-1,6-diylbis[3-(3,5-di-tert-butyl-4-hydroxyphenylpropionamide)] (like Irganox® 1098 and BNX1098), phosphites such as tris(2,4-di-tert-butylphenyl)phosphite (like Irgaphos® 168 and Benefos® 1680), thio-esters, cuprous iodide (CuI), potassium iodide (KI), and/or other stabilizers. It is appreciated that the person skilled in the art of polymer compounding can choose an appropriate combination of additives or stabilizer package for the polyamide and/or processing conditions. In one illustrative example, the stabilizing package be from 0.01% to 5.0% w/w of the overall polymer formulation, or 0.1% to 2.0% w/w; or 0.25% to 1.0% w/w in the final composition and in the range of 1.0% to 30% w/w or 5.0 to 15% w/w in the master batch.

Plasticizers, lubricants, rheology modifiers, friction modifiers, and other additives known to one skilled in the art may also be optionally added to the mixture depending on the application requirements. Illustrative additives include heat stabilizers, light stabilizers, flame retardants , polymerization regulators, plasticizers, lubricants, rheology modifiers, friction modifiers, anti-blocking agents, antioxidants, antistatic agents, pigments, dyes, glass fiber, other reinforcing or non-reinforcing fillers or mixtures thereof.

In one embodiment described herein is a process for producing an olefin-maleic anhydride copolymer master batch with alternating 1:1 ethylene maleic anhydride copolymers (EMAH). In one embodiment the process includes an extrusion compounding step. The extrusion compounding step can be accomplished using equipment known to one skilled in the art. In the plastics industry, compounding is a process that mixes one or more polymers with one or more additives to produce plastic compounds in one or more steps. The feeds (compounds and/or polymer components added to the compounding process) may be in the form of pellets, flakes, chips, powders and/or liquids. The master batch product is usually formed into a pellet form, to be used in other plastic-forming processes such as extrusion, thermoforming, blow molding, and/or injection molding. Use of twin-screw extruders or continuous mixers is preferred where the extruder is equipped with feeders equipped to handle low bulk density powder because they give better mixing at lower melt temperatures. Most of these have screws and barrels made up of segments for mixing, conveying, venting, and additive feeding. When the carrier resin is more flexible it may be advantageous to use other plastics compounding equipment such as single-screw extruders, oscillating screw extrusion, continuous mixers, Banbury mixers, and planetary extruders for compounding as well. Processing parameters such as the temperature of each segments or zones, feed rates, residence time and screw speed can be modified by the person skilled in the art for each application.

Described herein are polymer formulations comprising polyamides compounded with one or more of the olefin-maleic anhydride copolymers master batches described. Described herein are methods for compounding polyamide or polyamide-like materials with the olefin-maleic anhydride copolymer master batches described. In one embodiment, the method of producing polymer formulations of polyamides by reacting the polyamide with an olefin-maleic anhydride polymer master batch as described herein results in increases in the polyamide's molecular weight and/or favorable structural changes resulting in improved properties and performance characteristics such as increased tensile strength, stretch performance, impact strength, flex modulus, and heat deflection temperature.

In one illustrative embodiment of the method of producing a compounded polyamide described herein, the method optionally further comprises the step of converting the composition using a method known to one skilled in the art such as injection molding of the compounded polyamide. Optionally, the polyamide may be combined with the master batch of olefin-maleic anhydride copolymer directly during injection molding.

Polymers for use as carrier resins are selected from copolymers of ethylene and n-butyl acrylate, methyl acrylate, or ethyl acrylate, and combinations thereof. It is also appreciated that carrier resins are available in multiple grades. Selection of grades with lower molecular weight and higher melt index may result in minimizing high torque conditions during processing and/or provide a wider process window.

As used herein, the term "let down" applied to a master batch means to dilute or combine the master batch with other components to form the final polymer formulation.

Polyamides are typically condensation copolymers formed by reaction of dicarboxylic acids with diamines or by ring opening of lactams. Various polyamides can be created by adjusting the number of carbons. The nomenclature used herein designates the number of carbon atom in the diamine first and the number of carbons atoms in the diacid second. Therefore, polyamide-6,6 has six carbons donated by the diamine, and six carbons from the diacid, and polyamide-6,12 would have six carbons donated by the diamine and twelve carbons donated from the diacid. Distinct from polyamide-6,6, polyamide-6 is a homopolymer formed by a ring-opening polymerization (e.g. ring-opening polymerization of caprolactam). The term polyamides includes copolymers of more than one polyamide such as a copolymer of polyamide-6 and polyamide-6,6 called nylon-6-6,6 copolymer. Another example of a copolymer with three polyamides is a terpolymer of polyamide-6, polyamide 6,6 and polyamide 12.

Illustrative embodiments described herein include use of processing methods such as extrusion compounding using equipment known to one skilled in the art. In the plastics industry, compounding is a process that mixes one or more polymers with one or more additives to produce plastic compounds in one or more steps. The feeds may be pellets, powder and/or liquids, but the product is usually in pellet form, to be used in other plastic-forming processes such as extrusion and injection molding.

Other illustrative embodiments of the methods described herein include directly extruding the compounding mixture into a finished article such as a filament, fiber, film, sheet, and molded part. It is to be understood that the compounding step may include a reaction between one or more of the components of the mixture.

In any of the methods or compositions described herein, one or more UV stabilizers, or UV absorbents, halogenated or non-halogenated flame retardant additives, reinforcements such a mineral or fibers, fabrics, roving filaments, tubes and yarns, made from glass, carbon, graphite, cellulose and other natural materials; and/or aromatic high melting polymers (sometimes referred to as aramids) are included. Plasticizers, lubricants, rheology modifiers, friction modifiers, and other additives known to one skilled in the art may also be optionally added. Illustrative additives include heat stabilizers, light stabilizers, flame retardants, polymerization regulators, plasticizers, lubricants, rheology modifiers, friction modifiers, anti-blocking agents, antioxidants, antistatic agents, pigments, dyes, glass fiber, other reinforcing or non-reinforcing fillers or mixtures thereof.

In any of the methods or compositions described herein, the olefin-maleic anhydride can be an ethylene maleic anhydride alternating copolymer (EMAH) with a molar ratio of ethylene to maleic anhydride of about 1:1. In any of the methods or compositions described herein, the olefin-maleic anhydride can an ethylene maleic anhydride alternating copolymer (EMAH) with a molar ratio of ethylene to maleic anhydride of 1:99 to 99:1. In any of the methods or compositions described herein, the olefin-maleic anhydride copolymer can be a non-alternating copolymer or a random copolymer with a molar ratio of ethylene to maleic anhydride range of 1:50 to 50:1; 1:20 to 20:1; 1:10 to 10:1; 1:5 to 5:1; and 1:2 to 2:1.

In any of the methods or compositions described herein, the olefin-maleic anhydride copolymer can have a weight average molecular weight of in the range of 1000 to 900,000 ; 20,000 to 800,000; 40,000 to 600,000; 50,000 to 500,000; or 60,000 to 400,000. In any of the methods or compositions described herein, the 1:1 alternating olefin-maleic anhydride copolymer selected may be a 1:1 alternating copolymer of ethylene and maleic anhydride (1:1 EMA) with a molecular weight of about 60,000 such as that sold under the trademark ZeMac® E-60 (Vertellus Specialties Inc., E60), or the 1:1 EMA selected may have a molecular weight of about 400,000 such as that sold under the trademark ZeMac® E-400 (Vertellus Specialties Inc., E400).

Several illustrative embodiments of the invention are described by the following enumerated clauses:
1. A master batch composition for use in preparing a polyamide formulation from a polyamide, comprising an olefin-maleic anhydride copolymer and one or more carrier resins, wherein the carrier resin is an ethylene-n-butyl acrylate copolymer, an ethylene-ethyl acrylate copolymer, an ethylene-methyl acrylate copolymer, or a combination thereof.
2. The master batch composition of any one of the preceding clauses wherein the carrier resin is an ethylene-methyl acrylate copolymer.
3. The master batch composition of any one of the preceding clauses further comprising one or more additives independently selected in each instance from the group consisting of anti-oxidants, nucleating agents, colorants, plasticizers, lubricants, rheology modifiers, friction modifiers, flame retardants, fillers and reinforcements, other processing aids, and heat stabilizers for polyamides.
4. The master batch composition of any one of the preceding clauses wherein one or more of the additives is independently selected in each instance from the group consisting of anti-oxidants and heat stabilizers for polyamides.
5. The master batch composition of any one of the preceding clauses wherein the additives are cuprous iodide, potassium iodide, N,N'-hexane-1,6-diylbis[3-(3,5-di-tert-butyl-4-hydroxyphenylpropionamide)], and tris(2,4-di-tert-butylphenyl)phosphite.
6. The master batch composition of any one of the preceding clauses wherein the polyamide is a prime polyamide or a recycled polyamide, or combinations thereof.
7. The master batch composition of any one of the preceding clauses wherein the polyamide is a prime polyamide.
8. The master batch composition of any one of the preceding clauses wherein the polyamide is a recycled polyamide-6 or polyamide-6,6, or combinations thereof.
9. The master batch composition of any one of the preceding clauses wherein the polyamide is a recycled polyamide-6.
10. The master batch composition of any one of the preceding clauses wherein the polyamide is a recycled polyamide-6,6.
11. The master batch composition of any one of the preceding clauses wherein the olefin-maleic anhydride copolymer is a 1:1 olefin-maleic anhydride copolymer.
12. The master batch composition of any one of the preceding clauses wherein the olefin-maleic anhydride copolymer is a 1:1 ethylene-maleic anhydride copolymer.
13. The master batch composition of any one of the preceding clauses wherein the olefin-maleic anhydride copolymer is a 1:1 alternating copolymer.
14. The master batch composition of any one of the preceding clauses wherein the olefin-maleic anhydride copolymer is a 1:1 alternating ethylene-maleic anhydride copolymer has a weight average molecular weight (MW_{w}) of 1,000 to 800,000 Daltons.
15. The master batch composition of any one of the preceding clauses wherein the olefin-maleic anhydride copolymer is 1:1 alternating ethylene-maleic anhydride copolymer has a weight average molecular weight (MW_{w}) of 50,000 to 500,000 Daltons.
16. The master batch composition of any one of the preceding clauses wherein the olefin-maleic anhydride copolymer is a 1:1 alternating ethylene-maleic anhydride copolymer has a weight average molecular weight (MW_{w}) of 60,000 Daltons.
17. The master batch composition of any one of the preceding clauses wherein the olefin-maleic anhydride copolymer is a 1:1 alternating ethylene-maleic anhydride copolymer has a weight average molecular weight (MW_{w}) of 400,000 Daltons.
18. The master batch composition of any one of the preceding clauses wherein the concentration of olefin-maleic anhydride copolymer in the master batch is from 5% to 50%, or from 10% to 40%, or from 10% to 35%, or from 10% to 30%, or from 15% to 25%.
19. A process for preparing the master batch composition of any one of the preceding clauses, the process comprising the step of mixing an olefin-maleic anhydride copolymer with a carrier resin, wherein the carrier resin is an ethylene-n-butyl acrylate copolymer, an ethylene-ethyl acrylate copolymer, an ethylene-methyl acrylate copolymer, or a combination thereof.
20. The process of clause 19 wherein the carrier resin is an ethylene-methyl acrylate copolymer.
21. The process of any one of clauses 19 and 20 further comprising the step of adding one or more additives independently selected in each instance from the group consisting of anti-oxidants, nucleating agents, colorants, plasticizers, lubricants, rheology modifiers, friction modifiers, flame retardants, fillers and reinforcements, other processing aids, and heat stabilizers for polyamides.
22. The process of any one of clauses 19 to 21 wherein one or more of the additives is independently selected in each instance from the group consisting of anti-oxidants and heat stabilizers for polyamides.
23. The process of any one of clauses 19 to 2 wherein the additives are cuprous iodide, potassium iodide, N, N'-hexane-1,6-diylbis[3-(3,5-di-tert-butyl-4-hydroxyphenylpropionamide)], and tris(2,4-di-tert-butylphenyl)phosphite.
24. The process of any one of clauses 19 to 23 wherein the polyamide is a prime polyamide or a recycled polyamide, or combinations thereof.
25. The process of any one of clauses 19 to 24 wherein is a prime polyamide.
26. The process of any one of clauses 19 to 25 wherein the polyamide is a recycled polyamide-6 or polyamide-6,6, or combinations thereof.
27. The process of any one of clauses 19 to 26 wherein the olefin-maleic anhydride copolymer is a 1:1 olefin-maleic anhydride copolymer.
28. The process of any one of clauses 19 to 27 wherein the olefin-maleic anhydride copolymer is a 1:1 ethylene-maleic anhydride copolymer.
29. The process of any one of clauses 19 to 28 wherein the olefin-maleic anhydride copolymer is a 1:1 alternating copolymer.
30. The process of any one of clauses 19 to 29 wherein the 1:1 alternating ethylene-maleic anhydride copolymer has a weight average molecular weight (MW_{w}) of 1,000 to 800,000 Daltons.
31. The process of any one of clauses 19 to 30 wherein the 1:1 alternating ethylene-maleic anhydride copolymer has a weight average molecular weight (MW_{w}) of 50,000 to 500,000 Daltons.
32. The process of any one of clauses 19 to 314 wherein the 1:1 alternating ethylene-maleic anhydride copolymer has a weight average molecular weight (MW_{w}) of 60,000 Daltons.
33. A polyamide formulation comprising a recycled polyamide or a virgin polyamide, or combinations thereof compounded with the master batch composition of any one of clauses 1 to 18 in which the molecular weight of the polyamide is increased by reaction compounding it with the master batch composition of any one of clauses 1 to 18.
34. A polyamide formulation comprising a recycled polyamide or a virgin polyamide, or combinations thereof compounded with the master batch composition of any one of clauses 1 to 18 in which the molecular weight of the polyamide is increased by reaction compounding it with the master batch composition of any one of clauses 1 to 18.
35. The polyamide formulation of clause 33 or 34 wherein the polyamide is a virgin polyamide.
36. The polyamide formulation of any one of clauses 33 to 35 wherein the polyamide is a recycled polyamide-6 or polyamide-6,6, or combinations thereof.
37. The polyamide formulation of any one of clauses 33 to 36 wherein the polyamide is a recycled polyamide-6.
38. The polyamide formulation of clause 33 or 36 wherein the polyamide is a recycled polyamide-6,6.
39. The polyamide formulation of any one of clauses 33 to 48 wherein the polyamide formulation further comprises heat stabilizers, light stabilizers, flame retardants , polymerization regulators, plasticizers, lubricants, rheology modifiers, friction modifiers, anti-blocking agents, antioxidants, antistatic agents, pigments, dyes, glass fiber, other reinforcing or non-reinforcing fillers or mixtures thereof.
40. The polyamide formulation of any one of clauses 33 to 39 wherein the average molecule weight of the compounded polyamide is increased.
41. The polyamide formulation of any one of clauses 33 to 40 wherein the polyamide formulation has increased tensile strength, improved stretch performance, increased impact strength, increased flex modulus, increased heat deflection temperature, or a combination thereof compared to the unmodified polyamide
42. A process for preparing a polyamide formulation, the process comprising the step of reaction compounding a polyamide with the master batch composition of any one of claims 1 to 18.
43. The process of clause 42 wherein the polyamide is a virgin polyamide or a recycled polyamide.
44. The process of clause 42 or 43 wherein the polyamide is virgin polyamide.
45. The process of clause 42 or 43 wherein the polyamide is a recycled polyamide.
46 The process of any one of clauses 43 to 45 wherein the temperature of the compounding step is from 230° C to 280° C.
47. The process of any one of clauses 43 to 46 wherein the compounding step in performed in a twin-screw extruder, a single-screw extruder, an oscillating screw extruder, a continuous mixer, a Banbury mixer, or a planetary extruder.
48. The process of any one of clauses 43 to 47 wherein the concentration of the master batch composition in the polyamide formulation is from 0.5% to 10%, or about 1%, or about 2%, or about 3% or about 4% or about 5%.
49. The process of any one of clauses 43 to 48 wherein the process further comprises the step of adding glass fiber or other reinforcing fillers.
50. An article produced by injection molding, blow molding, roto-forming, fiber forming, film, profile and sheet extrusion and thermoforming of the modified polyamide formulation of clauses 43-49
51. The article produced using any of the formulations in clauses 33-39 wherein the master batch and polyamide are combined and optionally other components
52. The article produced using any of the formulation in clauses 33-39 wherein the modified polyamide and optionally other components are combined

The following examples further illustrate specific embodiments of the invention; however, the following illustrative examples should not be interpreted in any way to limit the invention.

### METHODS AND EXAMPLE MATERIALS

Polyamide 6 (grade PA6 NG320HSL) and polyamide 6,6 (grade PA66 NG320HSL) which are both recycled quality were obtained from Jamplast Inc. and were used as received. Care was taken to ensure that all grades stayed dry. The other Polyamide-6 used was a prime (also called virgin) grade from BASF called Ultramid B3S.

Optema™ grade TC 141, ethylene methyl acrylate copolymer resin was obtained from ExxonMobil Chemicals with a melt index of 110 g/min and used as the carrier resin. A 1:1 ethylene-maleic anhydride alternating copolymer grade ZeMac® E60 (E60) from Vertellus Specialties Inc. with a weight average molecular weight (MW_{w}) of 60,000 was used in illustrative examples. A 1:1 ethylene-maleic anhydride alternating copolymer grade ZeMac® E400 (E400) from Vertellus Specialties Inc. with a weight average molecular weight (MW_{w}) of 400,000 was also used in other illustrative examples.

### GENERAL COMPOUNDED MASTER BATCH PREPARATION

A counter-rotating inter-meshing twin screw extruder (Berstorff. 25 mm) was run with the temperature profile of 140, 150, 155, 155, 155, 155, 155, 170°C cooled in a water bath and pelletized. Two-feeder systems were used to prepare the master batches. The additives (e.g. stabilizer, anti-oxidant, optionally lubricant powders) were pre-mixed with olefin-maleic anhydride copolymers and fed through one feeder while carrier resin was fed through the other. One illustrative example of carrier resin used in this embodiment is Optema™ grade TC 141. Another example of carrier resin Ultramid® B24 N02, Polyamide-6 from BASF which does not react with ZeMac® E60 or ZeMac® E400. The resulting pellets were dried for 12 hours at 50°C to remove retained moisture. The formulations used for producing master batches with olefin-maleic anhydride copolymers and Polyamide-6 are shown in TABLE 1 (master batches marked with REF are included for reference purposes):

**TABLE 1**

| Materials | *MB-1 | MB-2 | MB-3 | MB-4 | MB-5 | MB-6 | MB-7 (REF) |
|---|---|---|---|---|---|---|---|
| Optema TC141 | 80 | 70 | 56.7 | 70 | 25 | 45 | - |
| Ultramid B24 N02 | - | - | - | - | - | - | 65 |
| ZeMac® E60 | 20 | 20 | 33.3 | 20 | 25 | 25 | 25 |
| Cuprous iodide (CuI) | - | 0.2 | 0.2 | 0.2 | 0.20 | 0.20 | 0.20 |
| Potassium iodide (KI) | - | 1.8 | 1.8 | 1.8 | 1.80 | 1.80 | 1.80 |
| BNX® 1098¹ | - | 2.0 | 2.0 | 2.0 | 2.00 | 2 | 2 |
| Benefos® 1680² | - | 6.0 | 6.0 | 6.0 | 6.00 | 6 | 6 |
| Acrawax® C³ | - | - | - | - | 5.00 | 20 | - |
| Polybond™ 3200 | - | - | - | - | 12.50 | - | - |
| DOW™ LLDPE DNDB-1077 NT 7 | - | - | - | - | 22.50 | - | - |

| | | | | | | | |
|---|---|---|---|---|---|---|---|
| *MB= Master batch Materials ¹N,N'-hexane-1,6-diylbis[3-(3,5-di-tert-butyl-4-hydroxyphenylpropionamide)] ²Tris(2,4-di-tert-butylphenyl)phosphite ³N,N' Ethylene Bis-stearamide | | | | | | | |

### PREPARATION OF COMPOUNDS OF MASTER BATCH COMPOSITIONS WITH RECYLED POLYAMIDE:

Composite pellets of compounded recycled polyamide (e.g. polyamide formulations) with ZeMac® E60 or E400 master batch compositions shown in TABLE 1 were prepared in a counter-rotating inter-meshing twin screw extruder (Coperion ZSK-40). Recycled polyamide-6 and Prime polyamide-6 compounding by itself and with E60, E400 and master batch samples were run using the temperature settings of 230, 240, 240, 240, 240, 250, 250, 250, 250, 250, 245, 240°C, while recycled polyamide-6,6 and Prime polyamide-6,6 by itself and with E60, E400 and master batch samples were compounded using temperature settings of 243, 254, 262, 268, 274, 281, 280, 276, 271, 274°C.

### GENERAL TESTING METHODS:

Tensile, flexural, Izod impact strength and melt flow index measurements were carried out using standard ASTM methods D-638, D-790, D-256 and D-1238 respectively at 23 °C. Heat deflection/distortion temperature (HDT) was measured using ASTM method D-648. These mechanical and thermal tests were carried out without additional drying; the samples were used as molded after conditioning the test specimen as described in the ASTM protocol. Water absorption tests were carried after drying to equilibration to ensure that all the absorbed water is between 0.1%-0.5% dryness levels.

### COMPOUNDING OF MASTER BATCH COMPOSITIONS WITH RECYCLED POLYAMIDE-6:

Polyamide-6 was compounded with various ethylene-maleic anhydride copolymer master batches shown in TABLE 1 and with ethylene-maleic anhydride copolymer powders directly. The compounding formulation with recycled polyamide-6 is shown in TABLE 2.

**TABLE 2**

| Materials | *F-1 | F-2 | F-3 | F-4 | F-5 | F-6 | F-7 | F-8 | F-9 |
|---|---|---|---|---|---|---|---|---|---|
| Recycled Polyamide-6 | 99.0 | 98.5 | 98.8 | 97.0 | 98.0 | 98.0 | 99.0 | 99.5 | 98.0 |
| MB-1 | - | 2.0 | - | - | - | - | - | - | - |
| MB-2 | - | - | 2.0 | - | - | - | - | - | - |
| MB-3 | - | - | - | 2.0 | | - | - | - | - |
| MB-4 | - | - | - | - | 1.0 | - | - | - | - |
| MB-5 | - | - | - | - | - | - | - | - | 2.0 |
| ZeMac® E400 Powder | - | - | - | - | - | 0.2 | - | - | - |
| ZeMac® E60 Powder | - | - | - | - | - | - | 0.5 | 0.5 | - |
| Cuprous Iodide (CuI) | - | - | - | - | - | 0.01 | 0.01 | - | - |
| Potassium Iodide (KI) | - | - | - | - | - | 0.09 | 0.09 | - | - |
| BNX® 1098 | - | - | - | - | - | 0.70 | 0.70 | - | - |
| Benefos® 1680 | - | - | - | - | - | 0.20 | 0.20 | - | - |

| | | | | | | | | | |
|---|---|---|---|---|---|---|---|---|---|
| *F= Formulation | | | | | | | | | |

The tensile strength, elongation and notched Izod impact strength of the resulting compounded materials are shown in TABLE 3. The results show that compounding of the polyamide with master batches MB-1 (F-2), MB-2 (F-3), and MB-3 (F-4) are all dosed at 2% in recycled Polyamide-6. The MB-1 and MB-2 at 2% is equivalent to 0.4% ZeMac® E60 Powder, MB-3 used at 2% is equivalent to 0.66% ZeMac® E60. The data in TABLE 3 demonstrates that increasing the ZeMac concentration in master batches results in an increase in overall mechanical properties. Since E400 is more reactive than E60 powder based on prior art knowledge, MB-4 was dosed at 1% which is equivalent to 0.2% ZeMac® E400 Powder, however only tensile strength and impact were found to be enhanced when compared to recycled Polyamide-6 by itself (F-1). The effect of same ZeMac® E60 concentrations i.e. 0.5% is compared in examples F-7, F-8 and F-9. The formulation F-9 containing MB-5 dosed at 2% in recycled polyamide-6 is equivalent to 0.5% ZeMac® E60.

**TABLE 3**

| Formulations | | Tensile (ASTM D638) | | | | Flexural (ASTM D790) | | Izod Impact Strength (ASTM D256) |
|---|---|---|---|---|---|---|---|---|
| | Materials | Modulus (MPa) | Stress @ Yield (MPa) | Stress @ Break (MPa) | Strain @ Break (%) | Modulus (MPa) | Strength @ Break (MPa) | @ Room Temp (ft-lb/in) |
| F-1 | Control | 2550.36 | 63.60 | 51.33 | 17.21 | 2639.98 | 95.90 | 1.30 |
| F-2 | MB-1 | 2510.87 | 70.01 | 50.90 | 21.69 | 2617.96 | 101.39 | 2.11 |
| F-3 | MB-2 | 2530.50 | 70.16 | 56.86 | 45.12 | 2690.53 | 102.84 | 2.13 |
| F-4 | MB-3 | 2671.52 | 72.47 | 64.94 | 63.81 | 2874.92 | 108.14 | 2.22 |
| F-5 | MB-4 | 2589.51 | 71.56 | 49.90 | 26.13 | 2547.69 | 100.68 | 1.65 |
| F-6 | E400 & Add. | 2576.36 | 71.33 | 49.23 | 28.15 | 2561.57 | 100.50 | 1.88 |
| F-7 | E60 & Add | 2655.15 | 72.36 | 60.56 | 59.10 | 2833.26 | 107.28 | 1.80 |
| F-8 | E60 | 2718.06 | 72.41 | 52.52 | 37.32 | 2854.27 | 102.95 | 1.76 |
| F-9 | MB-5 | 2700.90 | 74.00 | 59.37 | 32.15 | 2927.03 | 104.51 | 2.08 |

Typically, when flexural strength is increased in most plastics by some modification, elongation and impact decreases and vice versa. Formulations containing E60 powder or master batch both show enhanced impact and flex modulus which is contrary to the conventional trend that when flex modulus is enhanced impact properties are lowered. This impact effect is more pronounced in master batch formulations compared to EMAH powder.

The example F-7, TABLE 3 containing ZeMac® E60 powder along with stabilizers (CuI = 0.01%, KI = 0.09%, hindered phenol anti-oxidant = 0.4%, phosphite stabilizer=0.5%) show improved properties compared to one without example F-8 which means that stabilizer combination is required for property enhancement. As stated earlier, the polyamide formulation in example F-4 prepared with MB-3 (0.66% E60 dosage level) shows significantly better results in several properties compared to the polyamide formulation prepared with a simple mixture of E60 powder with master batches MB-1, MB-2 and MB-4. Based on these results, it is evident that in order to ultimately yield upgraded properties in Polyamide, an optimal level of stabilizers and E60 powder and combination of stabilizers is required. Additionally, compatibilizers and lubricants may also be desired to address torque build-up and compatibilizing various polymer impurities present in recycled polyamide streams. One example of such a formulation is MB-5which contains optimal combination of E60, stabilizers, compatibilizers and lubricant. Formulation (F-9) shows that when master batch MB-5 is compounded with recycled polyamide-6 it yields the greatest mechanical properties when compared to all the master batches and EMAH powders, suggesting that this master batch composition is imparting a synergistic effect. In general it is believed that the results shown in Table 3 indicate that polyamides compounded with E60 master batches are being modified into a more uniform highly branched structure with very high molecular weight which results in a stronger and tougher compounded polyamide (e.g. polyamide formulation) without sacrificing the impact strength of polyamide.

During compounding, increases in both viscosity and torque were observed. Torque is an issue when chain-extenders such as E60 powder are used to increase the molecular weight of polyamide. The results from TABLE 4 indicates that using the master batch composition F-9 containing lubricant, MB-5 at 2% (0.5% effective E60 loading), can effectively reduce polyamide torque when compounded with when compared to formulation F-8 with same concentration of 0.5% E60 powder.

**TABLE 4**

| Formulations | Torque (Nm) |
|---|---|
| F-1 | 60.4 |
| F-8 | 88.6 |
| F-9 | 79.0 |

The increase in molecular weight was confirmed by reduction of melt flow rate shown in TABLE 5, indicating higher viscosities. The reduction of melt flow is seen with all the master batch compositions as well as E60 powder.

**TABLE 5**

| Formulations | MFR ASTM D1238 @ 275°C w/5kg (g/10min) |
|---|---|
| F-1 | 96.64 |
| F-2 | 19.35 |
| F-3 | 19.24 |
| F-4 | 12.67 |
| F-5 | 34.92 |
| F-6 | 50.16 |
| F-7 | 20.07 |
| F-8 | 20.51 |
| F-9 | 21.19 |

Table 6 shows compounding of recycled polyamide-6 and 30% glass fibers with and without the master batch of the present invention.

**TABLE 6**

| Materials | *F-9 | F-10 |
|---|---|---|
| Recycled Polyamide-6 | 70 | 67.5 |
| MB-5 | - | 2.5 |
| Glass Fiber¹ | 30 | 30 |

| | | |
|---|---|---|
| *F= Formulation ¹ PPG Chop Vantage HP 3540 | | |

The mechanical property results of the compounded recycled polyamide are shown in TABLE 7. The compounding results of glass fiber recycled polyamide-6 composite with master batch MB-5 shows improved flex modulus and impact strength without compromising the heat deflection temperature when compared to glass fiber recycled polyamide-6 composite itself.

**TABLE 7**

| Formulations | Flexural Modulus (ASTM D790) (MPa) | Izod Impact Strength (ASTM D256) @ Room Temp.(ft-lb/in) | HDT (ASTM D648) @ 264 psi (°C) |
|---|---|---|---|
| F-9 | 8054.45 | 1.3 | 199.5 |
| F-10 | 8245.84 | 1.8 | 196.2 |

### COMPOUNDING WITH RECYCLED POLYAMIDE-6,6:

Compounding formulation of Recycled Polyamide-6,6 with E60 powder and various master batches are shown in TABLE 8.

**TABLE 8**

| Materials | *F-11 | F-12 | F-13 |
|---|---|---|---|
| Recycled Polyamide-6,6 | 99.0 | 97.7 | 98.4 |
| MB-5 | - | - | 1.2 |
| ZeMac® E60 Powder | - | 0.3 | - |

| | | | |
|---|---|---|---|
| *F= Formulation | | | |

Similar to the results for polyamide-6, mechanical properties of polyamide-6,6 are also improved as seen from TABLE 9. In general, the results show improvements in all three properties for the polyamide formulations compounded with both master batches and E60 powder. The results are summarized in TABLE 9 which shows that at same ZeMac® E60 concentrations i.e. 0.3% in examples F-12 and F-13. The formulation F13 with MB-5 shows the best balance of property enhancement while maintaining the impact.

**TABLE 9**

| Formulations | Materials | Tensile (ASTM D638) | | | | Flexural (ASTM D790) | | Izod Impact Strength (ASTM D256) |
|---|---|---|---|---|---|---|---|---|
| | | Modulus (MPa) | Stress @ Yield (MPa) | Stress @ Break (MPa) | Strain @ Break (%) | Modulus (MPa) | Stress @ Break (MPa) | @ Room Temp (ft-lb/in) |
| F-11 | Control | 2390.38 | 52.58 | 51.81 | 6.74 | 2541.59 | 83.53 | 0.8 |
| F-12 | E60 | 2475.76 | 56.88 | 56.45 | 5.79 | 2556.47 | 82.33 | 0.9 |
| F-13 | MB-5 | 2448.54 | 56.23 | 55.55 | 5.86 | 2775.20 | 82.22 | 0.9 |

TABLE 10 shows the decrease of melt flow rate in recycled polyamide-6,6 compounded with master batches and ZeMac® E60 powder. The decrease in melt flow rate is a good indication of chain extension reaction in polyamide.

**TABLE 10**

| Formulations | MFR ASTM (D1238) @ 275°C w/5kg (g/10min) |
|---|---|
| F-11 | 116.20 |
| F-12 | 48.85 |
| F-13 | 34.26 |

Table 11 shows compounding of recycled polyamide-6,6 and 30% glass fibers with and without master batch MB-5 of the present invention.

**TABLE 11**

| Materials | *F-14 | F-15 |
|---|---|---|
| Recycled Polyamide-66 | 70 | 68.4 |
| MB-5 | - | 1.6 |
| Glass Fiber¹ | 30 | 30 |

| | | |
|---|---|---|
| *F= Formulation ¹ PPG Chop Vantage HP 3540 | | |

The mechanical property results of the compounded recycled polyamide are shown in TABLE 12. The results indicates that when master batch MB-5 is used at 1.6% which translates to 0.4% effective ZeMac E60 powder in glass fiber recycled polyamide-6,6 composite, the composite shows enhanced flex modulus without compromising the heat distortion temperature (HDT) and impact strength.

**TABLE 12**

| Formulations | Flexural (ASTM D790) | | Izod Impact Strength (ASTMD256) | HDT (ASTM D648) |
|---|---|---|---|---|
| | Modulus (MPa) | Strength @ Break (MPa) | @ Room Temp.(ft-lb/in) | @ 264 psi (°C) |
| F-14 | 7681.83 | 172.25 | 1.3 | 234 |
| F-15 | 7884.98 | 152.99 | 1.3 | 233 |

### COMPOUNDING WITH PRIME POLYAMIDE-6:

Both E60 powder and master batch (MB-6) compounding formulations with prime polyamide-6 is shown in TABLE 12. Ultramid B3S (prime Polyamide-6) sold by BASF Corp was used in the formulations.

**TABLE 12**

| Material | F-16 | F-17 | F-18 |
|---|---|---|---|
| Prime Polyamide-6 | 100 | 99.5 | 98.0 |
| ZeMac® E60 Powder | - | 0.5 | - |
| MB-6 | - | - | 2.0 |

Table 13 shows master batch (F18) and E60 powder (F17) with improved tensile strength, flex modulus and impact properties when compared to the recycled polyamide-6 (F20).

**TABLE 13**

| Formulations | Tensile (ASTM D638) | | | | Flexural (ASTM D790) | | Izod Impact Strength (ASTM D256) |
|---|---|---|---|---|---|---|---|
| | Modulus (MPa) | Stress @ Yield (MPa) | Stress @ Break (MPa) | Strain @ Break (%) | Modulus (MPa) | Stress @ Break (MPa) | @ Room Temp (ft-lb/in) |
| F-16 | 2817.80 | 78.43 | 64.31 | 9.49 | 2786.30 | 109.25 | 0.91 |
| F-17 | 2663.11 | 85.43 | 44.86 | 14.98 | 2992.03 | 121.31 | 0.77 |
| F-18 | 2626.04 | 83.12 | 63.19 | 23.65 | 3078.11 | 117.91 | 1.27 |

Mixed results are seen between master batch and E60 powder. While E60 powder was found to have improved tensile strength over master batch, the master batch shows improvement in both flex modulus and impact.

### COMPOUNDING WITH PRIME POLYAMIDE-6,6:

Prime Polyamide-6,6 (Ultramid A34, BASF) was compounded with E60 powder and two different master batches MB-6 and MB-7 as shown in TABLE 15. The main composition differences of both master batches are the carrier resin. MB-6 is made using ethyl methyl acrylate resin, while MB-7 is made using end-capped prime Nylon-6. Due to the fact the prime Nylon-6 used is end-capped resin ensures that amine groups are protected and not available for reaction with ZeMac. It is appreciated that other end-capped polyamides

**TABLE 15**

| Material | F-19 | F-20 | F-21 | F-22 |
|---|---|---|---|---|
| Prime Polyamide-6,6 | 100 | 99.5 | 98.0 | 97.6 |
| ZeMac® E60 Powder | - | 0.5 | - | - |
| MB-6 | - | - | 2.0 | - |
| MB-7 | - | - | - | 2.4 |

The results in TABLE 16 shows that again E60 powder and both master batches shows increased mechanical properties in all cases when compared to the Prime Polyamide-6,6. The results also show that both master batches shows increased property over E60 powder due to synergistic effects of carrier resin, stabilizer and lubricant combination with E60 powder in the master batch compositions. Master batch MB-6 (F21) shows improved flex and tensile strength over M-7 (F22) which is believed to be due to softer carrier resin quickly melting and exposing E60 to Nylon thus resulting in enhance reaction between Nylon and E60. While the master batch M-7 having Nylon as carrier resin melts relatively slower and thus causing even reactive extrusion with the amine groups in Prime Polyamide-6,6 resulting in improved tensile strength compared to F21 formulation.

**TABLE 16**

| Formulations | Tensile (ASTM D638) | | | Flexural (ASTM D790) | | Izod Impact Strength (ASTM D256) |
|---|---|---|---|---|---|---|
| | Modulus (MPa) | Stress @ Yield (MPa) | Strain @ Break (%) | Modulus (MPa) | Stress @ Break (MPa) | @ Room Temp. (ft-lb/in) |
| F-19 | 2845.46 | 82.72 | 6.04 | 2898.17 | 113.38 | 0.54 |
| F-20 | 2569.43 | 82.94 | 21.89 | 2918.11 | 113.48 | 0.81 |
| F-21 | 2626.04 | 83.12 | 23.65 | 3078.11 | 117.91 | 1.27 |
| F-22 | 2799.74 | 88.65 | 17.99 | 2993.26 | 123.14 | 0.83 |

TABLE 17 shows the torque values produced during compounding of formulations of TABLE 16. At equivalent loading levels of 0.5% ethylene-maleic anhydride copolymer, the master batch shows much lower torque, compared to E60 powder.

**TABLE 17**

| Formulations | Torque (Nm) |
|---|---|
| F-19 | 58.0 |
| F-20 | 85.0 |
| F-21 | 77.0 |
| F-22 | 71.0 |

## Claims

1. A master batch composition for use in preparing a polyamide formulation from a polyamide, comprising an olefin-maleic anhydride copolymer and one or more carrier resins selected from the group consisting of ethylene-n-butyl acrylate copolymer, an ethylene-ethyl acrylate copolymer, and an ethylene-methyl acrylate copolymer, or a combination thereof, wherein the concentration of olefin-maleic anhydride copolymer in the master batch is from 5% to 50%, or from 10% to 40%, or from 10% to 35%, or from 10% to 30%, or from 15% to 25%.

2. The master batch composition of claim 1, further comprising one or more additives independently selected in each instance from the group consisting of anti-oxidants, nucleating agents, colorants, plasticizers, lubricants, rheology modifiers, friction modifiers, other processing aids, and heat stabilizers for polyamides and optionally wherein
(i) one or more additives are independently selected in each instance from the group consisting of anti-oxidants and heat stabilizers for polyamides, or
(ii) wherein the additives are cuprous iodide, potassium iodide, N,N'-hexane-1,6-diylbis[3-(3,5-di-tert-butyl-4-hydroxyphenylpropionamide)], and tris(2,4-di-tert-butylphenyl)phosphite.

3. The master batch composition of claim 1, wherein the polyamide is a prime polyamide or a recycled polyamide, or
wherein the polyamide is a prime polyamide, or
wherein the polyamide is a recycled polyamide-6 or polyamide-6,6, or
wherein the polyamide is a recycled polyamide-6, or
wherein the polyamide is a recycled polyamide-6,6.

4. The master batch composition of claim 1, wherein
the olefin-maleic anhydride copolymer is a 1:1 olefin-maleic anhydride copolymer, or
the olefin-maleic anhydride copolymer is a 1:1 ethylene-maleic anhydride copolymer, or
the olefin-maleic anhydride copolymer is a 1:1 alternating copolymer, or
the olefin-maleic anhydride copolymer is a 1:1 alternating ethylene-maleic anhydride copolymer having a weight average molecular weight (MW_{w}) of 1,000 to 800,000 Daltons, or
the olefin-maleic anhydride copolymer is 1:1 alternating ethylene-maleic anhydride copolymer having a weight average molecular weight (MW_{w}) of 50,000 to 500,000 Daltons, or
the olefin-maleic anhydride copolymer is a 1:1 alternating ethylene-maleic anhydride copolymer having a weight average molecular weight (MW_{w}) of 60,000 Daltons.

5. A process for preparing the master batch composition of claim 1, the process comprising the step of mixing an olefin-maleic anhydride copolymer with a carrier resin selected from the group consisting of ethylene-n-butyl acrylate copolymer, an ethylene-ethyl acrylate copolymer, and an ethylene-methyl acrylate copolymer, or a combination thereof, wherein the concentration of olefin-maleic anhydride copolymer in the master batch is from 5% to 50%, or from 10% to 40%, or from 10% to 35%, or from 10% to 30%, or from 15% to 25%.

6. The process of claim 5, further comprising the step of adding one or more additives independently selected in each instance from the group consisting of anti-oxidants, nucleating agents, colorants, plasticizers, lubricants, rheology modifiers, friction modifiers, other processing aids, and heat stabilizers for polyamides, and optionally wherein
(i) one or more of the additives is independently selected in each instance from the group consisting of anti-oxidants and heat stabilizers for polyamides, or
(ii) wherein the additives are cuprous iodide, potassium iodide, N, N'-hexane-1,6-diylbis[3-(3,5-di-tert-butyl-4-hydroxyphenylpropionamide)], and tris(2,4-di-tert-butylphenyl)phosphite.

7. The process of claim 5, wherein
the polyamide is a prime polyamide or a recycled polyamide, or
the polyamide is a prime polyamide, or
the polyamide is a recycled polyamide-6 or polyamide-6,6.

8. The process claim 7, wherein the olefin-maleic anhydride copolymer is a 1:1 olefin-maleic anhydride copolymer, or
the olefin-maleic anhydride copolymer is a 1:1 ethylene-maleic anhydride copolymer, or
the olefin-maleic anhydride copolymer is a 1:1 alternating copolymer and optionally wherein
(i) the olefin-maleic anhydride copolymer is a 1:1 alternating ethylene-maleic anhydride copolymer having a weight average molecular weight (MW_{w}) of 1,000 to 800,000 Daltons, or
(ii) the olefin-maleic anhydride copolymer is a 1:1 alternating ethylene-maleic anhydride copolymer having a weight average molecular weight (MW_{w}) of 50,000 to 500,000 Daltons, or
(iii) the olefin-maleic anhydride copolymer is a 1:1 alternating ethylene-maleic anhydride copolymer having a weight average molecular weight (MW_{w}) of 60,000 Daltons.

9. A polyamide formulation comprising a recycled polyamide or a virgin polyamide compounded with the master batch composition of claim 1.

10. The polyamide formulation of claim 9, wherein
the polyamide is a virgin polyamide, or
the polyamide is a recycled polyamide-6 or polyamide-6,6, or
the polyamide is a recycled polyamide-6, or
the polyamide is a recycled polyamide-6,6.

11. A process for preparing a polyamide formulation, the process comprising the step of reaction compounding a polyamide with the master batch composition of claim 1.

12. The process of claim 11, wherein
the polyamide is a virgin polyamide or a recycled polyamide, or
the polyamide is virgin polyamide, or
the polyamide is a recycled polyamide.

13. The process of claim 11 wherein the temperature of the compounding step is from 230° C to 280° C.

14. The process of claim 11 wherein the compounding step in performed in a twin-screw extruder, a single-screw extruder, an oscillating screw extruder, a continuous mixer , a Banbury mixer, or a planetary extruder.

15. The process of claim 11 wherein the concentration of the master batch composition in the polyamide formulation is from 0.5% to 10%, or about 1%, or about 2%, or about 3% or about 4% or about 5%.

## Patentansprüche

1. Masterbatch-Zusammensetzung zur Verwendung in der Herstellung einer Polyamid-Formulierung aus einem Polyamid, die ein Olefin-Maleinsäureanhydrid-Copolymer und ein oder mehrere Trägerharze umfasst, ausgewählt aus der Gruppe bestehend aus Ethylen-n-Butylacrylat-Copolymer, einem Ehtylen-Ethylacrylat-Copolymer und einem Ethylen-Methylacrylat-Copolymer oder einer Kombination daraus, wobei die Konzentration von Olefin-Maleinsäureanhydrid-Copolymer in dem Masterbatch zwischen 5 % und 50 % oder zwischen 10 % und 40 % oder zwischen 10 % und 35 % oder zwischen 10 % und 30 % oder zwischen 15 % und 25 % liegt.

2. Masterbatch-Zusammensetzung nach Anspruch 1, die ferner einen oder mehrere Additive umfasst, die in jeder Instanz unabhängig ausgewählt sind aus der Gruppe bestehend aus Antioxidationsmitteln, Nukleirungsmitteln, Farbstoffen, Weichmachern, Schmiermitteln, Rheologiemodifizierungsmitteln, Reibungsmodifizierungsmitteln, anderen Verarbeitungshilfen und Wärmestabilisatoren für Polyamide und wahlweise, wobei
(i) ein oder mehrere Additive in jeder Instanz unabhängig ausgewählt sind aus der Gruppe bestehend aus Antioxidationsmitteln und Wärmestabilisatoren für Polyamide, oder
(ii) wobei die Additive kupferartiges Iodid, Kaliumiodid, N,N'-Hexan-1,6-diylbis[3-(3,5-di-tert-butyl-4-hydroxyphenylpropionamid)] und tris(2,4-di-tert-Butylphenyl)phosphit sind.

3. Masterbatch-Zusammensetzung nach Anspruch 1, wobei das Polyamid ein Grundpolyamid oder ein recyceltes Polyamid ist, oder
wobei das Polyamid ein Grundpolyamid ist, oder
wobei das Polyamid ein recyceltes Polyamid-6 oder Polyamid-6,6 ist, oder
wobei das Polyamid ein recyceltes Polyamid-6 ist, oder
wobei das Polyamid ein recyceltes Polyamid-6,6 ist.

4. Masterbatch-Zusammensetzung nach Anspruch 1, wobei
das Olefin-Maleinsäureanhydrid-Copolymer ein 1:1-Olefin-Maleinsäureanhydrid-Copolymer ist, oder
das Olefin-Maleinsäureanhydrid-Copolymer ein 1:1-Ethylen-Maleinsäureanhydrid-Copolymer ist, oder
das Olefin-Maleinsäureanhydrid-Copolymer ein 1:1-alternierendes Copolymer ist, oder das Olefin-Maleinsäureanhydrid-Copolymer ein 1:1-alternierendes Ethylen-Maleinsäureanhydrid-Copolymer ist, das ein gewichtsdurchschnittliches Molekulargewicht (MW_{w}) von 1.000 bis 800.000 Daltons aufweist, oder
das Olefin-Maleinsäureanhydrid-Copolymer ein 1:1-alternierendes Ethylen-Maleinsäureanhydrid-Copolymer ist, das ein gewichtsdurchschnittliches Molekulargewicht (MW_{w}) von 50.000 bis 500.000 Daltons aufweist, oder
das Olefin-Maleinsäureanhydrid-Copolymer ein 1:1-alternierendes Ethylen-Maleinsäureanhydrid-Copolymer ist, das ein gewichtsdurchschnittliches Molekulargewicht (MW_{w}) von 60.000 Daltons aufweist.

5. Prozess zur Herstellung der Masterbatch-Zusammensetzung aus Anspruch 1, wobei der Prozess die Schritte des Mischens eines Olefin-Maleinsäureanhydrid-Copolymers mit einem Trägerharz umfasst, ausgewählt aus der Gruppe bestehend aus Ethylen-n-Butylacrylat-Copolymer, einem Ehtylen-Ethylacrylat-Copolymer und einem Ethylen-Methylacrylat-Copolymer oder einer Kombination daraus, wobei die Konzentration von Olefin-Maleinsäureanhydrid-Copolymer in dem Masterbatch zwischen 5 % und 50 % oder zwischen 10 % und 40 % oder zwischen 10 % und 35 % oder zwischen 10 % und 30 % oder zwischen 15 % und 25 % liegt.

6. Prozess nach Anspruch 5, der ferner den Schritt des Addierens von einem oder mehreren Additiven umfasst, die in jeder Instanz unabhängig ausgewählt sind aus der Gruppe bestehend aus Antioxidationsmitteln, Nukleirungsmitteln, Farbstoffen, Weichmachern, Schmiermitteln, Rheologiemodifizierungsmitteln, Reibungsmodifizierungsmitteln, anderen Verarbeitungshilfen und Wärmestabilisatoren für Polyamide und wahlweise, wobei
(i) ein oder mehrere der Additive in jeder Instanz unabhängig ausgewählt sind aus der Gruppe bestehend aus Antioxidationsmitteln und Wärmestabilisatoren für Polyamide, oder
(ii) wobei die Additive kupferartiges Iodid, Kaliumiodid, N,N'-Hexan-1,6-diylbis[3-(3,5-di-tert-butyl-4-hydroxyphenylpropionamid)] und tris(2,4-di-tert-Butylphenyl)phosphit sind.

7. Verfahren nach Anspruch 5, wobei
das Polyamid ein Grundpolyamid oder ein recyceltes Polyamid ist, oder
das Polyamid ein Grundpolyamid ist, oder
das Polyamid ein recyceltes Polyamid-6 oder Polyamid-6,6 ist.

8. Prozess nach Anspruch 7, wobei das Olefin-Maleinsäureanhydrid-Copolymer ein 1:1-Olefin-Maleinsäureanhydrid-Copolymer ist, oder
das Olefin-Maleinsäureanhydrid-Copolymer ein 1:1-Ethylen-Maleinsäureanhydrid-Copolymer ist, oder
das Olefin-Maleinsäureanhydrid-Copolymer ein 1:1-alternierendes Copolymer ist, und wahlweise, wobei
(i) das Olefin-Maleinsäureanhydrid-Copolymer ein 1:1-alternierendes Ethylen-Maleinsäureanhydrid-Copolymer ist, das ein gewichtsdurchschnittliches Molekulargewicht (MW_{w}) von 1.000 bis 800.000 Daltons aufweist, oder
(ii) das Olefin-Maleinsäureanhydrid-Copolymer ein 1:1-alternierendes Ethylen-Maleinsäureanhydrid-Copolymer ist, das ein gewichtsdurchschnittliches Molekulargewicht (MW_{w}) von 50.000 bis 500.000 Daltons aufweist, oder
(iii) das Olefin-Maleinsäureanhydrid-Copolymer ein 1:1-alternierendes Ethylen-Maleinsäureanhydrid-Copolymer ist, das ein gewichtsdurchschnittliches Molekulargewicht (MW_{w}) von 60.000 Daltons aufweist.

9. Polyamid-Formulierung, die ein recyceltes Polyamid oder ein Ausgangspolyamid umfasst, das mit der Masterbatch-Zusammensetzung aus Anspruch 1 verbunden wird.

10. Polyamid-Formulierung nach Anspruch 9, wobei das Polyamid ein Ausgangspolyamid ist, oder
das Polyamid ein recyceltes Polyamid-6 oder Polyamid-6,6 ist oder das Polyamid ein recyceltes Polyamid-6 ist oder das Polyamid ein recyceltes Polyamid-6,6 ist.

11. Prozess zum Herstellen einer Polyamid-Formulierung, wobei der Prozess den Schritt des Reaktionsverbindens eines Polyamids mit der Masterbatch-Zusammensetzung nach Anspruch 1 umfasst.

12. Verfahren nach Anspruch 11, wobei
das Polyamid ein Ausgangspolyamid oder ein recyceltes Polyamid ist oder das Polyamid ein Ausgangspolyamid ist oder
das Polyamid ein recyceltes Polyamid ist.

13. Prozess nach Anspruch 11, wobei die Temperatur des Verbindungsschritts zwischen 230 °C und 280 °C liegt.

14. Prozess nach Anspruch 11, wobei der Verbindungsschritt in einem Doppelschneckenextruder, einem Einschneckenextruder, einem schwingenden Schneckenextruder, einem kontinuierlichen Mischer, einem Banbury-Mischer oder einem Planetenwalzextruder durchgeführt wird.

15. Prozess nach Anspruch 11, wobei die Konzentration der Masterbatch-Zusammensetzung in der Polyamid-Formulierung zwischen 0,5 % und 10 % liegt oder etwa 1 % oder etwa 2 % oder etwa 3 % oder etwa 4 % oder etwa 5 % ist.

## Revendications

1. Composition de mélange-maître destinée à être utilisée dans la préparation d'une formulation de polyamide à partir d'un polyamide, comprenant un copolymère d'oléfine-anhydride maléique et une ou plusieurs résines de support sélectionnées parmi le groupe constitué par un copolymère d'éthylène-n-acrylate de butyle, un copolymère d'éthylène-acrylate d'éthyle, et un copolymère d'éthylène-acrylate de méthyle, ou une combinaison de ceux-ci, dans laquelle la concentration du copolymère d'oléfine-anhydride maléique dans le mélange-maître est de 5 % à 50 %, ou de 10 % à 40 %, ou de 10 % à 35 %, ou de 10 % à 30 %, ou de 15 % à 25 %.

2. Composition de mélange-maître selon la revendication 1, comprenant en outre un ou plusieurs additifs sélectionnés indépendamment dans chaque cas parmi le groupe constitué par des antioxydants, des agents de nucléation, des colorants, des plastifiants, des lubrifiants, des modificateurs de rhéologie, des modificateurs de frottement, d'autres auxiliaires de traitement, et des stabilisants thermiques pour polyamides, et facultativement dans laquelle
(i) un ou plusieurs additifs sont indépendamment sélectionnés dans chaque cas parmi le groupe constitué par des antioxydants et des stabilisants thermiques pour polyamides, ou
(ii) dans lequel les additifs sont l'iodure cupreux, l'iodure de potassium, le N,N'-hexane-1,6-diylbis[3-(3,5-di-tert-butyl-4-hydroxyphénylpropionamide)], et le tris(2,4-di-tert-butylphényl)phosphite.

3. Composition de mélange-maître selon la revendication 1, dans laquelle le polyamide est un polyamide premier ou un polyamide recyclé, ou
dans laquelle le polyamide est un polyamide premier, ou
dans laquelle le polyamide est un polyamide 6 ou polyamide 6,6 recyclé, ou
dans laquelle le polyamide est un polyamide 6 recyclé, ou
dans laquelle le polyamide est un polyamide 6,6 recyclé.

4. Composition de mélange-maître selon la revendication 1, dans laquelle
le copolymère d'oléfine-anhydride maléique est un copolymère d'oléfine-anhydride maléique 1/1, ou
le copolymère d'oléfine-anhydride maléique est un copolymère d'éthylène-anhydride maléique 1/1, ou
le copolymère d'oléfine-anhydride maléique est un copolymère alterné 1/1, ou le copolymère d'oléfine-anhydride maléique est un copolymère d'éthylène-anhydride maléique alterné 1/1 ayant une masse moléculaire moyenne en poids (MW_{w}) de 1 000 à 800 000 daltons, ou
le copolymère d'oléfine-anhydride maléique est un copolymère d'éthylène-anhydride maléique alterné 1/1 ayant une masse moléculaire moyenne en poids (MW_{w}) de 50 000 à 500 000 daltons, ou
le copolymère d'oléfine-anhydride maléique est un copolymère d'éthylène-anhydride maléique alterné 1/1 ayant une masse moléculaire moyenne en poids (MW_{w}) de 60 000 daltons.

5. Procédé destiné à préparer la composition de mélange-maître selon la revendication 1, le procédé comprenant l'étape de mélange d'un copolymère d'oléfine-anhydride maléique avec une résine de support sélectionnée parmi le groupe constitué par un copolymère d'éthylène-n-acrylate de butyle, un copolymère d'éthylène-acrylate d'éthyle, et un copolymère d'éthylène-acrylate de méthyle, ou une combinaison de ceux-ci, dans lequel la concentration du copolymère d'oléfine-anhydride maléique dans le mélange-maître est de 5 % à 50 %, ou de 10 % à 40 %, ou de 10 % à 35 %, ou de 10 % à 30 %, ou de 15 % à 25 %.

6. Procédé selon la revendication 5, comprenant en outre l'étape d'ajout d'un ou de plusieurs additifs sélectionnés indépendamment dans chaque cas parmi le groupe constitué par des antioxydants, des agents de nucléation, des colorants, des plastifiants, des lubrifiants, des modificateurs de rhéologie, des modificateurs de frottement, d'autres auxiliaires de traitement, et des stabilisants thermiques pour polyamides, et facultativement dans laquelle
(i) un ou plusieurs des additifs sont indépendamment sélectionnés dans chaque cas parmi le groupe constitué par des antioxydants et des stabilisants thermiques pour polyamides, ou
(ii) dans lequel les additifs sont l'iodure cupreux, l'iodure de potassium, le N,N'-hexane-1,6-diylbis[3-(3,5-di-tert-butyl-4-hydroxyphénylpropionamide)], et le tris(2,4-di-tert-butylphényl)phosphite.

7. Procédé selon la revendication 5, dans lequel
le polyamide est un polyamide premier ou un polyamide recyclé, ou
le polyamide est un polyamide premier, ou
le polyamide est un polyamide-6 ou polyamide-6,6 recyclé.

8. Procédé selon la revendication 7, dans lequel le polymère d'oléfine-anhydride maléique est un copolymère d'oléfine-anhydride maléique 1/1, ou
le copolymère d'oléfine-anhydride maléique est un copolymère d'éthylène-anhydride maléique 1/1, ou
le copolymère d'oléfine-anhydride maléique est un copolymère alterné 1/1, et facultativement
(i) le copolymère d'oléfine-anhydride maléique est un copolymère d'éthylène-anhydride maléique alterné 1/1 ayant une masse moléculaire moyenne en poids (MW_{w}) de 1 000 à 800 000 daltons, ou
(ii) le copolymère d'oléfine-anhydride maléique est un copolymère d'éthylène-anhydride maléique alterné 1/1 ayant une masse moléculaire moyenne en poids (MW_{w}) de 50 000 à 500 000 daltons, ou
(iii) le copolymère d'oléfine-anhydride maléique est un copolymère d'éthylène-anhydride maléique alterné 1/1 ayant une masse moléculaire moyenne en poids (MW_{w}) de 60 000 daltons.

9. Formulation de polyamide comprenant un polyamide recyclé ou un polyamide vierge formé en mélange avec la composition de mélange-maître selon la revendication 1.

10. Formulation de polyamide selon la revendication 9, dans laquelle le polyamide est un polyamide vierge, ou
le polyamide est un polyamide 6 ou polyamide 6,6 recyclé, ou le polyamide est un polyamide 6 recyclé, ou le polyamide est un polyamide 6,6 recyclé.

11. Procédé destiné à préparer une formulation de polyamide, le procédé comprenant l'étape de formation de mélange par réaction d'un polyamide avec la composition de mélange-maître selon la revendication 1.

12. Procédé selon la revendication 11, dans lequel
le polyamide est un polyamide vierge ou un polyamide recyclé, ou le polyamide est un polyamide vierge, ou
le polyamide est un polyamide recyclé.

13. Procédé selon la revendication 11 dans lequel la température de l'étape de formation de mélange est de 230 °C à 280 °C.

14. Procédé selon la revendication 11 dans lequel l'étape de formation de mélange est réalisée dans une extrudeuse à double vis, un extrudeuse à vis simple, une extrudeuse à vis oscillante, un mélangeur continu, un mélangeur Banbury, ou une extrudeuse planétaire.

15. Procédé selon la revendication 11 dans lequel la concentration de la composition de mélange-maître dans la formulation de polyamide est de 0,5 % à 10 %, ou d'environ 1 %, ou d'environ 2 %, ou d'environ 3 % ou d'environ 4 % ou d'environ 5 %.
